# EUROPEAN PATENT APPLICATION

(11) **EP 4 447 295 A1**
(43) Date of publication of application: **16.10.2024**
(21) Application number: 23167258.5
(22) Date of filing: 11.04.2023
(51) Int. Cl.: H02K 15/00, H02K 15/03, H02K 7/18

(54) **EXTRACTION SYSTEM AND METHOD FOR EXTRACTING MAGNET ELEMENTS**

(71) Applicant: Siemens Gamesa Renewable Energy A/S, 7330 Brande (DK)
(72) Inventor: Azar, Ziad, Sheffield, S10 4ED (GB); Gonzalez, Adolfo Garcia, 7400 Herning (DK)
(74) Representative: SGRE-Association

(57) **Abstract**

An extraction system configured to extract one or more magnet elements (10) from a wind turbine generator component (200) is provided. The wind turbine generator component (200) comprises plural rows (220) of magnet elements (10), each row (220) comprising one or more magnet elements (10). The extraction system (100) comprises an extraction device (20) comprising one or more actuators (25) and a support structure (50) that supports the wind turbine generator component (200) relative to the extraction device (20). The support structure (50) is configured to provide an alignment between the extraction device (20) and a row (220) of the wind turbine generator component (200). The system is configured to automatically extract, by means of the extraction device (20), one or more magnet elements (10) from the row (220) of the wind turbine generator component (200).

## Description

### FIELD OF THE INVENTION

The present invention relates to an extraction system for extracting one or more magnet elements from a wind turbine generator component and to a respective method.

### BACKGROUND

Over the past years, the size of wind turbines and their output power has been increasing significantly. Modern high power wind turbines include direct drive wind turbines in which the generator rotor is directly coupled to the wind turbine rotor without intervening gearbox. Such direct drive generators generally employ permanent magnets, usually on the generator rotor. For an exemplary wind turbine, six tons of permanent magnets may for example be used on the generator rotor. For example, neodymium (Ne) iron (Fe) boron (B) permanent magnets are used, as they can generate high magnetic fields. The use of heavy rare earths (HREs) for manufacturing respective permanent magnets however faces challenges. For example, such material suffers from the fluctuation of HRE international prices. Also, the extraction and mining of such heavy rare earths has a high environmental impact. There is further a high criticality of these materials. The manufacturing of respective permanent magnets for equipping a generator rotor thus involves several difficulties.

The inventors have therefore found that it is desirable to re-use permanent magnet material and in particular to recover such permanent magnet material at the end of life of respective wind turbine generators. Such recovery however faces several difficulties, in particular since due to the high permanent magnetic fields, the magnets can generate high forces so that handling by personnel may be dangerous. Further, since a generator rotor may have more than 1.000 magnets, their recycling is expensive and time-consuming. Even further, due to the magnetic forces generated by respectively strong permanent magnets, their removal from the generator rotor may face difficulties.

### SUMMARY

Accordingly, there is a need to mitigate at least some of the drawbacks mentioned above. In particular, there is a need to provide a simple and efficient way of re-using material from permanent magnets provided in a wind turbine generator.

This need is met by the features of the independent claims. The dependent claims describe embodiments of the invention.

According to an embodiment of the invention, an extraction system configured to extract one or more magnet elements from a wind turbine generator component is provided. The wind turbine generator component (herein also abbreviated as generator component, or component) comprises plural rows of magnet elements. Each row comprises one or more magnet elements. The extraction system comprises an extraction device comprising one or more actuators. A support structure is further provided that supports the wind turbine generator component relative to the extraction device. The support structure is configured to provide an alignment between the extraction device and a row of the wind turbine generator component. The system is configured to automatically extract by means of the extraction device one or more magnet elements from the (aligned) row of the wind turbine generator component.

By such automatic extraction from the generator component, the magnet elements may be removed fast and efficiently, and without endangering any personnel. Eliminating the intervention of operators in the process increases the safety. A large scale separation of the magnet elements from the generator component may further be enabled, and a large number of magnet elements may be removed within a short time. Such automated extraction may further facilitate the transportation of the magnet elements to subsequent processing, such as demagnetization. Further, such automatic extraction device may overcome the high forces required for separating the magnet elements from the generator component. Even further, compared to other conceivable recycling methods, an extracted magnet element may be easier to demagnetize and to subsequently disassemble. Without extraction, this may not be possible, and demagnetization may for example take significantly longer and may be less effective.

The generator component may for example comprise plural rows of magnet elements that are distributed circumferentially around the component and that may extend in an axial direction of the component. Each row may for example comprise at least 1, 2, 3 or more magnet elements, e.g. 3-10.

The extraction system may be configured to extract magnet elements continuously and automatically from plural rows of the generator component.

The generator component may for example be a generator rotor, but may also be a generator stator, in particular of a direct drive generator.

A magnet element may be or may include one or more permanent magnets. A magnet element may include a housing, which may for example comprise a base plate and a cover, and a permanent magnet block arranged within the housing. Besides such housing, another type of encapsulation may also be provided. The magnet element may thus be a magnet module.

Preferably, the magnet elements are still magnetized, and the system is configured to extract the magnetized magnet elements from the generator component.

The extraction device may be configured to extract one magnet element after the other. Preferably, the extraction device is configured to extract all magnet elements of a row.

In an embodiment, the extraction system further comprises a positioning device configured to automatically position the wind turbine generator component relative to the extraction device so as to provide the alignment between the extraction device and the row. Such positioning device may thus facilitate the alignment, in particular in view of the potentially heavy weight of the generator component.

The positioning device may for example comprise an actuator configured to rotate and/or translate the wind turbine generator component relative to the extraction device. Preferably, it may rotate the generator component while the extraction device remains stationary. The positioning device may include a respective rotational actuator.

For example, the positioning device comprises one or more motor-driven rollers that rest against an outer and/or inner circumference of the wind turbine component and that are drivable to rotate the wind turbine component. The number of motor-driven rollers may for example be adapted in accordance with the size/weight of the generator component, and may for example be between 1 and 6. The positioning device may further comprise one or more guiding rollers that rest against an outer and/or inner circumference of the wind turbine component. A more stable positioning may thereby be achieved. For example, between 3 and 10 rollers may be provided, e.g. five, and some of them, preferably all of them, may be motor-driven.

The extraction system may further comprise a position detector configured to detect a relative position between the wind turbine generator component and the extraction device. The detected relative position may be used for providing the alignment between the extraction device and the row. An encoder, such as a rotary encoder, may for example be used to detect the angular orientation of the generator component on the support. Such position detector may provide feedback for the positioning device or may be used to provide feed-forward control, and may thus ensure a precise alignment of a row of the generator component with the extraction device.

The generator component itself may comprise a bearing by means of which it may be rotatably supported. Also, it is possible that the support structure is provided with a bearing that provides a respective rotatable support for the wind turbine component.

The support structure may have an adjustable size to accommodate differently sized wind turbine components to be supported. The size may for example be adjustable so that the above-mentioned rollers rest against the wind turbine generator component. For example, the support structure may comprise telescopic shafts or beams configured to allow the adjustment of a size of a frame that supports the rollers.

The generator component may have a significant size and weight. For example, the diameter may exceed three or even five meters, and the weight may be more than 1 or 5 tons, e.g. several tons.

In an embodiment, the one or more actuators of the extraction device are operable to extract the one or more magnet elements of a row by separating the respective one or more magnet elements from a magnet mount of the wind turbine generator component.

In an example, the extraction device may move, by means of the actuator, the one or more magnet elements relative to the magnet mount to release the one or more magnet elements from the magnet mount. The magnet mount may for example be a slot, such as a T-shaped slot, from which the magnet elements are pushed or pulled out. In another example, the actuator may loosen a fastening member of the magnet mount to release the one or more magnet elements from the magnet mount. A screw or other fastening member may for example be disengaged by means of the actuator, which may for example include a respective robotic arm or the like. In another example, the magnet mount may be disassembled by the actuator to release the one or more magnet elements from the magnet mount. It is possible that the mount is destroyed thereby, for example by cutting elements of the mount or the like using a respective actuator. It should be clear that the configuration of the extraction device is generally chosen so as to correspond to the way in which the magnet elements are mounted to the generator component. Accordingly, by such extraction device, the magnet elements may be removed efficiently and safely from the generator component, and an effective removal is enabled for different configurations of the generator component.

In a particular example, the extraction device comprises a push assembly and/or a pull assembly configured to push or pull, respectively, the one or more magnet elements relative to the wind turbine component to release the one or more magnet elements from a magnet mount of the wind turbine component. In particular, the mount may provide a form-fitting connection from which the magnet elements are released. Such form-fitting connection may be provided by a slot, such as a T-shaped slot, into which the magnet elements are inserted, as for example described in the document EP 2 555 393 A1. This may allow a reduced complexity of the extraction device and may provide a simple way of disassembling the magnet elements from the generator component.

The extraction device may comprise a guide rail, and the push/pull assembly may comprise a carriage movable in push or pull direction on the guide rail. The actuator of the extraction device may actuate the carriage. The carriage may for example have opposing rollers that roll on the guide rail in the push/pull direction, i.e. in the direction of extraction.

The actuator may for example be a hydraulic or pneumatic cylinder; electrically driven actuators are likewise conceivable. Such cylinder may for example retract to pull the carriage in extraction direction of the magnet elements, or such cylinder may push the carriage in the extraction direction.

The push assembly may comprise an engagement member that engages the magnet element in push direction behind the magnet element. The actuator may be configured to push or pull the engagement member to thereby cause the engagement member to push the magnet element in push direction. The engagement member may for example be provided on the carriage, and the actuator may push or pull the carriage to push or pull the engagement member in extraction direction. Thereby, the engagement member may push out the magnet elements in the extraction direction, thereby releasing the magnet elements from the magnet mount.

The engagement member may for example be a hook or other element, such as a (sufficiently strong) protrusion that can be inserted behind the magnet element to be pushed. Preferably, the engagement member engages the last magnet element (as seen from the end of the magnet mount where the magnet elements are extracted), so that all magnet elements of the row are pushed simultaneously by the push assembly. By step-wise actuating the push assembly, one magnet element after the other may be released from the magnet mount. The engagement member may itself be actuated in order to engage the magnet element, for example the respective hook or plate or the like may be pushed out of the carriage to be positioned behind the magnet element, or may passively engage the magnet element, e.g. driven by weight.

In an embodiment, the extraction device may comprise a repositioning device configured to change the orientation of a magnet element extracted from a row. This has particular benefits when extracting the magnet elements in vertical direction, so that further transport of the magnet element may be occur once it is re-oriented in horizontal direction. The re-positioning device may in particular change the orientation by (about) 90°, e.g. from vertical to horizontal. In an exemplary implementation, the re-positioning device may comprise a support plate on which the magnet element is supported (e.g., it may be pushed onto the support plate during extraction), and an actuator, which may include a mechanical linkage, that rotates the support plate to the desired orientation. Other components of the extraction system may then further move the magnet element.

In this respect, it is emphasized again that respective magnet elements generate excessively high attractive forces, due to the strength of the magnets, so that their handling is rather difficult.

The extraction system may for example further comprise a moving device configured to move an extracted magnet element onto a transport device. Such moving device may for example push or pull the magnet element. It may for example comprise a pneumatic or hydraulic cylinder, that either pushes the magnet element, or that pulls the magnet element. Pulling may for example be achieved by using suction (e.g. a suction cup or the like) to hold or grasp the magnet element and then to pull the magnet element by retraction of the respective cylinder. The moving device may for example move the re-oriented magnet element from the support plate onto the transport device. Depending on the setup, the transport device may for example be a horizontal, vertical, or inclined conveyor.

The wind turbine component may have a cylindrical shape, and the support structure may be configured to support the wind turbine component with a cylinder axis of the cylindrical shape oriented in vertical direction. The extraction device may extract the one or more magnet elements from the wind turbine component in a vertical direction, for example upwards or downwards. In such configuration, the system may for example comprise a vertical conveyor to transport extracted magnet elements in vertical direction to the desired location. Other configurations, including an inclined conveyor or the like, are also conceivable. In other implementations, the support structure may orient the wind turbine generator component with a cylindrical axis in horizontal direction, and the extraction device may extract the magnet elements in horizontal direction.

The moving device may move the extracted magnet elements onto the vertical conveyor, an inclined conveyor, or a horizontal conveyor.

A vertical conveyor may for example be a circular conveyor with one or more carriers mounted to a chain or belt. A horizontal or inclined conveyor may likewise comprise plural carriers mounted to a chain or belt, or may be a simple belt conveyor.

The system may further comprise a transport device configured to interface a demagnetization system for demagnetizing magnet elements, and to convey the one or more extracted magnet elements towards the demagnetization system. By providing such interface, an efficient and continued processing of the magnet elements may be achieved. Such transport system may again be a conveyor, such as conveyor belt, chain conveyor with carriers, slat conveyor, or the like, e.g. a belt conveyor with two belts and intermediate carriers.

In implementations where both a vertical conveyor and a transport system that provides the interface to the demagnetization system are provided, the extraction system may further comprise a moving device configured to move the one or more extracted magnet elements from the vertical conveyor to the transport device. Again, the moving device may push or pull the magnet element in any of the above described manners.

The extraction system may further comprise a control system configured to control the extraction system. The control system may be configured to perform the steps of (a) automatically aligning a row of the wind turbine component with the extraction device (e.g. by controlling the positioning device based on the position indicated by the position detector), (b) automatically extracting one or more magnet elements from the row (e.g. by respectively controlling the extraction device; preferably, all magnet elements of the row are extracted), (c) automatically transporting the one or more extracted magnet elements towards a further processing device (e.g. to a demagnetization system, for example by controlling the optional repositioning device, moving device and transport device, e.g. vertical and/or horizontal/inclined conveyor), and repeating steps (a)-(c) for one or more, preferably for all, rows of the wind turbine generator component.

An efficient and fast extraction of magnet elements from the generator component without human intervention may thus be achieved, which significantly reduces the recycling time for such component and further increases the safety for the personnel.

The extraction system may be a modular system that is provided as a module and is configured to interface a module comprising a demagnetization system, which is configured to demagnetize the one or more magnet elements. The extraction system is preferably configured to fit into a standard container (e.g. a 20, 24 or 40 foot container). The container may in particular be an intermodal container, e.g. a container under ISO standard 668:2020 or comparable standard. Transportation and set-up of the extraction system may thereby be facilitated.

According to another embodiment of the invention, a method of extracting one or more magnet elements from a wind turbine generator component is provided. The wind turbine generator component comprises plural rows of magnet elements, each row comprising one or more magnet elements. The method comprises supporting, by a support structure, the wind turbine generator component relative to an extraction device that comprises one or more actuators; aligning a row of the wind turbine generator component with the extraction device; and automatically extracting, by means of the extraction device, one or more magnet elements from the (aligned) row of the wind turbine generator component. By such method, advantages similar to the ones outlined further above may be achieved.

In an embodiment, the method may further comprise repeating the step of the aligning of the row and the step of automatically extracting for plural rows of the wind turbine generator component, wherein the aligning is performed by a positioning device that automatically positions the row of the wind turbine generator component in alignment with the extraction device. The positioning may for example comprises turning the generator component until a row of magnet elements is aligned with the extraction device.

The method may further comprise any of the steps described herein with respect to the extraction system. Further, the control system may be configured to perform any of the methods described herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing illustrating an extraction system according to an embodiment.
Fig. 2 is a schematic drawing illustrating a magnet element according to an embodiment.
Fig. 3 is a schematic drawing illustrating an extraction system according to an embodiment.
Fig. 4 is a schematic drawing showing the extraction system of figure 3 with a wind turbine generator component being supported.
Fig. 5 is a schematic drawing showing details of the extraction device of the extraction system of figure 3.
Fig. 6 is a schematic drawing showing details of magnet element transport devices of the extraction system of figure 3.
Fig. 7 is a schematic drawing illustrating the modular design of the extraction system of figure 3 and the transportation thereof in a standard container.
Fig. 8 is a flow diagram illustrating a method of extracting magnet elements according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

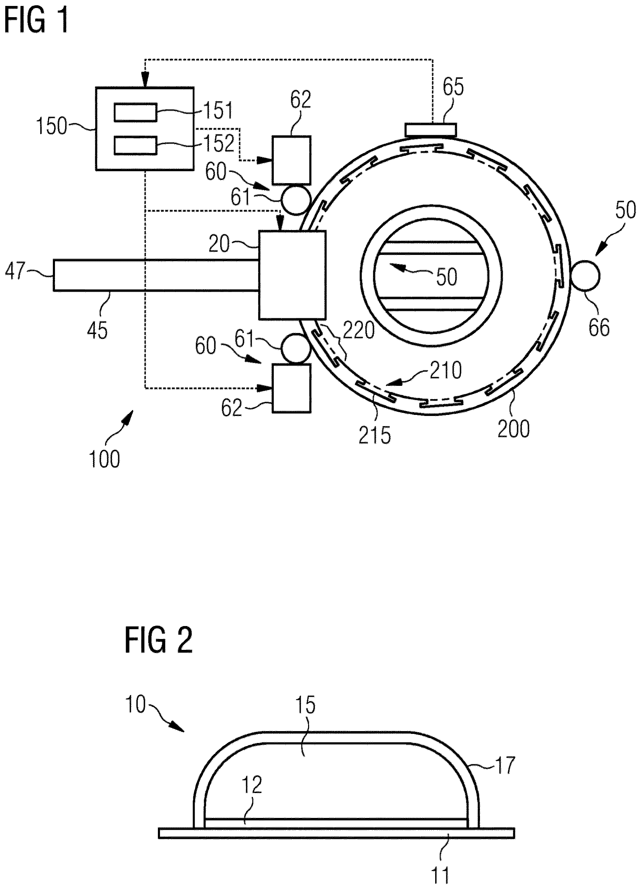

Fig. 1 schematically illustrates an extraction system 100 according to an embodiment. It comprises a support structure 50 that supports the wind turbine generator component 200, an extraction device 20 that extracts magnet elements 10 from rows 220 of the component 200, and a transport device 45 that provides an interface 47 to a demagnetization system.

Component 200 has a cylindrical shape, and the cylinder axis of this shape extends perpendicular to the drawing plane. On the inner cylindrical surface, plural rows 220 of magnets are provided, wherein each row 220 comprises one, two or more, for example between one and ten, magnet elements. Component 200 has a respective magnet mount 210, which can be provided in the form of slots 215, which are T-shaped in the present example. These T-shaped slots receive magnet elements 10, which are illustrated in more detail in Fig. 2. Magnet element 10 includes a base plate 11, onto which one or more permanent magnet blocks 15 are mounted by means of an adhesive 12. Magnet block 15 is covered by a cover 17, which may for example be made of sheet metal. Magnet element 10 may thus be an encapsulated or housed permanent magnet. It should be clear that other types of encapsulations and housings are possible, or that the magnet element 10 may simply consist of one or more permanent magnet blocks 15. Other types of magnet mounts 210 may then be employed. A form-fitting connection may be provided between the base plate 11 and the T-shaped slot 215, so that magnet elements 10 can be mounted to component 200 by inserting the magnet elements into slots 215, as for example explained in the document EP 2 555 393 A1. The present extraction system is however not limited to such configurations, and it may extract magnet elements from any type of magnet mount 210.

In the example of Fig. 1, component 200 is a generator rotor (in particular an external rotor), on the inner cylindrical surface of which the rows 220 with magnet elements 10 are provided. Extraction system 100 may also configured to extract magnets from other types of WT generator components, such as internal rotors having magnets arranged on the outer cylindrical surface, generator stators comprising permanent magnets, and the like.

Extraction device 20 is configured to extract the one or more magnet elements from row 220, until all elements from the row have been extracted. System 100 is further configured to transfer the extracted magnet elements to the transport device 45 so that they are transported, preferably to a further processing stage, such as a demagnetization system. Transport device 45 may include a conveyor, such as a belt or chain conveyor.

System 100 is configured to align a row 220 of component 200 with the extraction device 20 to allow the extraction. For this purpose, it may comprise one or more positioning devices 60. These may comprise a roller 61 driven by a motor 62. Roller 61 interacts with component 200 to rotate the component so as to align a row 220 with extraction device 20. Several of such positioning devices 60 may be provided, for example to rotate a relatively large generator component, e.g. between one and ten, preferably between one and five positioning devices. Rollers 61 may interact with the inner or outer cylindrical surface. In other implementations, the positioning device 60 may interact with a hub of component 200, or may include any other device suitable for aligning and in particular rotating component 200.

The support structure 50 may include a component support that supports the component 200, and may further include any other elements that provide the necessary support for component 200, such as guide rollers 66. Support structure 50 may support component 200 with a cylindrical axis of component 200 oriented in vertical direction, but supporting component 200 such that the cylindrical axis is oriented in horizontal direction is likewise conceivable.

Extraction system 100 may include a control system 150 that controls the elements of system 100. Control system 150 controls the positioning devices 60 to align a row 220 of component 200 with the extraction device 20 and further controls extraction device 20 to extract the one or more magnet elements from the aligned row 220. It may further control the transfer of the extracted one or magnet elements onto the transport device 45, which may run continuously or may likewise be controlled by control system 150. Extraction system 100 may comprise a position detector 65, such as an encoder, which provides position information to control system 150. This facilitates alignment of the row 220 with the extraction system 20 by actuating positioning devices 60. Feed-forward or feedback control based on the position information may be employed by control system 150.

Control system 150 may thus cause the extraction system 100 to automatically extract magnet elements from plural rows 220 of component 200. In particular, the control system 150 may operate system 100 to continuously extract magnet elements from component 200 until all magnet elements have been extracted. A fast and automatic extraction of the magnet elements of component 200 without human intervention may thus be achieved. It should be clear that in such continuous operation, the transport device 45 may be operated intermittently, it may for example wait until a magnet element has been extracted and transferred onto the transport device before continuing the transportation.

Control system 150 may comprise a processing unit 151 and a memory 152. Memory 152 may comprise control instructions that are executed by processing unit 151. By executing the instructions by processing unit 151, the control system 150 may cause the extraction system 100 to perform any of the methods described herein. Processing unit 151 may include a microprocessor, an application specific integrated circuit, a digital signal processor, or the like. Memory 152 may include any type of volatile and non-volatile memory, such as RAM, ROM, Flash-Memory, or the like. Control system 150 may comprise any other elements common to a computing system, such as respective input and output interfaces for receiving information and sending control signals, as well as a user interface.

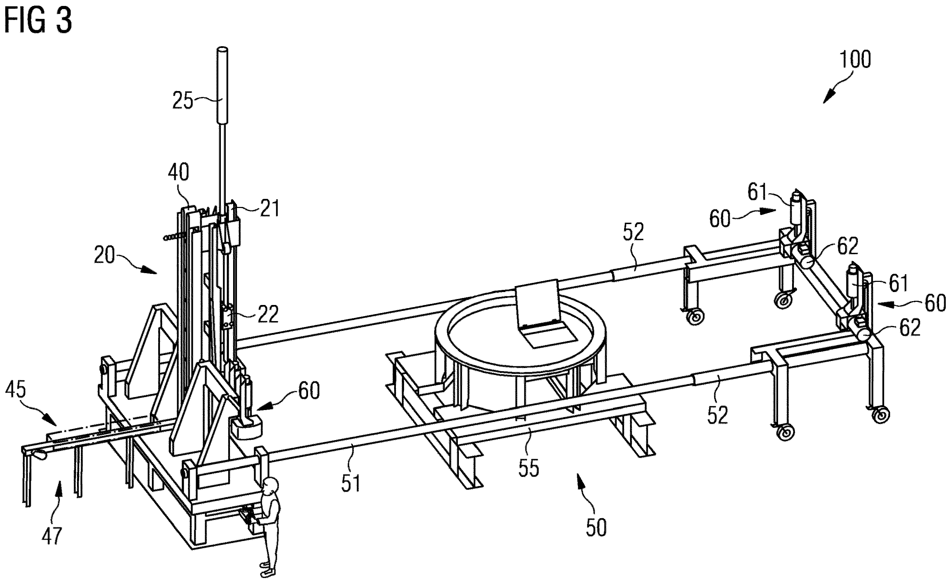

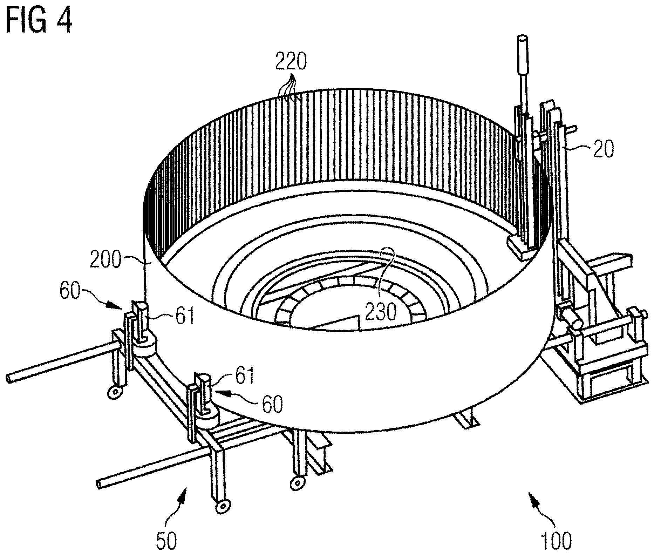

Fig. 3 illustrates a particular implementation of the extraction system 100 of Fig. 1 so that the above explanations equally apply. The support structure 50 comprises the component support 55 on which component 200 is supported, as illustrated in Fig. 4. Component 200 may comprise a bearing 230 that facilitates rotation of component 200. If no such bearing is present, a respective bearing may be provided by the support structure 50, e.g. on the component support 55. Support structure 50 further comprises a frame 51, which may have an adjustable size. Frame 51 may include telescopic shafts 51 that allow adaptation of support structure 50 to the size of component 200. On frame 51, positioning devices 60 are mounted, wherein rollers 61 are configured to rest against the component 200 when this is supported as shown in Fig. 4. Driving rollers 61 by the respective motors rotates component 200 to align rows 220 with the extraction device 20.

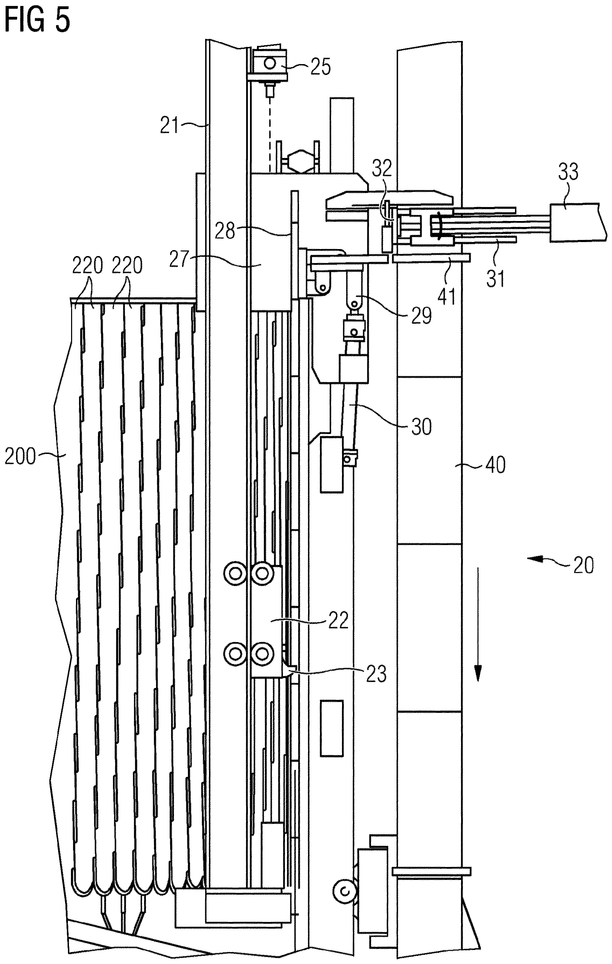

Extraction device 20 of system 100 of Fig. 3 is illustrated in more detail in Fig. 5. It comprises a guide rail 21 on which a carriage 22 is movable in the direction of extraction of the magnet elements. Carriage 22 may comprise wheels that run on a respective rail of the guide rail 21. Extraction device 20 further comprises an engagement member 23, that is provided in form of a hook on carriage 22 in the example of Fig. 5. Engagement member 23 engages the last magnet of the row 220 behind the magnet element when seen in extraction direction. In the present example, the extraction direction is vertically upwards. There may be a respective space available behind the last magnet of the row where engagement member 23 can be inserted. The engagement may occur by the weight of the engagement member, e.g. the weight of the hook may turn it under the magnet element. It may also actively occur, for example by a pneumatic, hydraulic or electric actuator.

A hydraulic cylinder 25 (see also Fig. 3) moves carriage 22 into the position where engagement member 23 can engage the magnet element. Thereafter, it moves carriage 22 upwards, so that the uppermost magnet element is released from the magnet mount 210, it is in particular pushed out of the slot 215. It may travel in extraction by direction by the length of one magnet element, so that one magnet element is released. This may continue one by one, so that one magnet element is released at a time.

Extraction system 100 may be configured to transfer the extracted and released magnet element onto a transport device 40, 45. In the present example, the extraction device comprises a re-positioning device 27 that includes a support plate 28, a mechanical linkage 29 and a hydraulic or pneumatic cylinder 30. When the magnet element is released from the magnet mount 210, it strongly adheres to the support plate 28. By actuating cylinder 30 and thus linkage 29, support plate 28 changes its orientation from vertical to horizontal, and so does the magnet element. A moving device 31 then transfers the magnet element to the transport device 40. Moving device 31 comprises in the present example a suction cup 32 that grabs or adheres to the magnet element and a hydraulic or pneumatic cylinder 33. After grabbing the magnet element, cylinder 33 retracts and thus pulls the magnet element onto the transport device 40.

Transport device 40 is in the present example a vertical, circular conveyor that includes carriers 41, which may for example be supported and driven by two belts or chains that run in respective guides, as commonly known in the art.

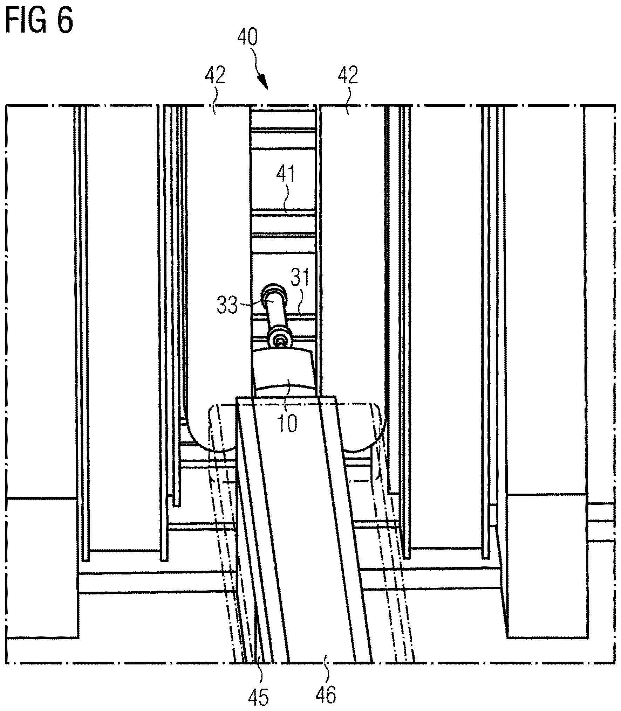

Fig. 6 illustrates further details of the transport device 40, which includes the conveyor supports 42 that include the respective belt or chain. In the present example, the extracted magnet elements are transported vertically downwards. A further moving device 31 with cylinder 33 transfers the magnet elements 10 from the transport device 40 to a further transport device 45, which is in the present example a conveyor with a conveyor belt 46. Transport device 45 provides the interface 47 to a next processing step, in particular to a demagnetization system.

It should be clear that the above describes only an exemplary implementation of the extraction system 100, and that plural modifications are possible and within the scope of the present disclosure. Engagement member 23 may for example not be provided on a carriage, but may simply slide in a slot of guide rail 21 or the like. If extraction occurs in horizontal direction, no re-positioning device 27 and no vertical transport device 40 may be required. Further, besides using vertical and horizontal transport devices 40, 45, only a single inclined transport device may be used. Instead of pushing magnet elements out of the row 220 by engagement member 23, the magnet elements may likewise be pulled out. Similarly, moving device 31 of Fig. 5 may push the magnet elements instead of pulling them. Further, the hydraulic/pneumatic cylinders 25, 30, 33 may be substituted by other actuators, such as electrically driven actuators or the like.

Extraction system 100 may also extract magnet elements from a generator component having a different type of magnet mount 210. If the magnets are mounted by fastening members, such as screws, bolts or the like, the extraction device 20 may for example comprise a robotic arm with actuators or other equipment to loosen such fastening members and to then transfer the magnet elements onto the transport device. In even other implementations, elements of the magnet mount 210 may need to be disassembled, either by dismounting or by destructive disassembly, in order to release the magnet elements. Such disassembly may likewise be performed by a respective configuration of the extraction device 20.

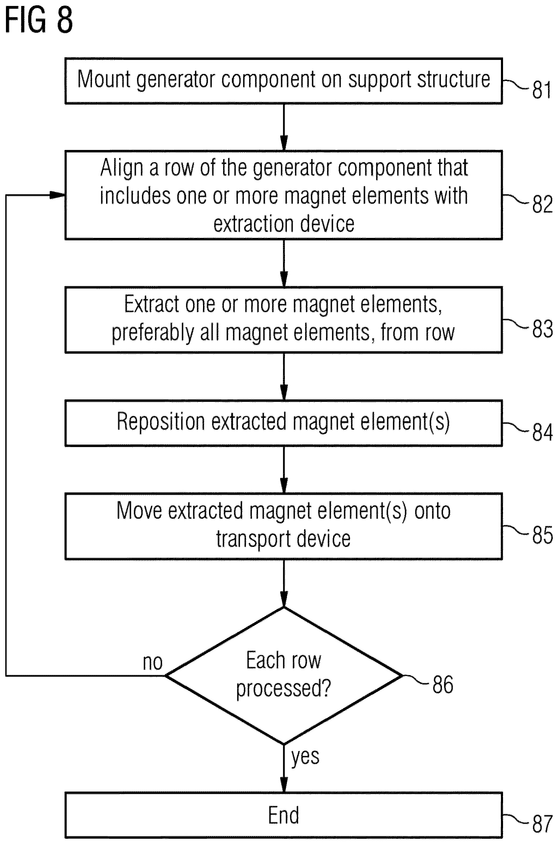

Fig. 8 illustrates a flow diagram of a method according to an embodiment, which may be performed by the extraction system of Figs. 1 or 3. In step 81, the generator component 200 is mounted on the support structure 50 of extraction system 100. In step 82, a row 220 of the generator component 200, which includes one or more magnet elements 10, is aligned with the extraction device 20. After alignment, one or more magnet elements 10, preferably all magnet elements, are extracted from row 220 (step 83). This may occur by engaging the hook of carrier 22 and pulling up carrier 22 by hydraulic cylinder 25 to push the magnet elements out of slot 215. The extracted magnet elements may optionally be repositioned in step 84, e.g. by reorienting using device 27. The extracted magnet elements are then moved onto a transport device in step 85, for example onto transport device 40 by means of moving device 31. This is preferably performed for all of the magnet elements extracted from the row.

In step 86, it is checked if each row 220 of the component 200 has been processed, i.e. if all magnets have been extracted from the component 200. If this is not the case, then the method continues in step 82 with the alignment of the next row that comprises magnet elements. If each row has been processed, the method ends in step 87.

A component 200 may for example comprise more than 250 rows, each including more than five magnet elements. Accordingly, more than 1000 magnet elements have to be extracted. By means of extraction system 100, such extraction is made significantly faster and facilitated, without creating dangerous situations for human operators.

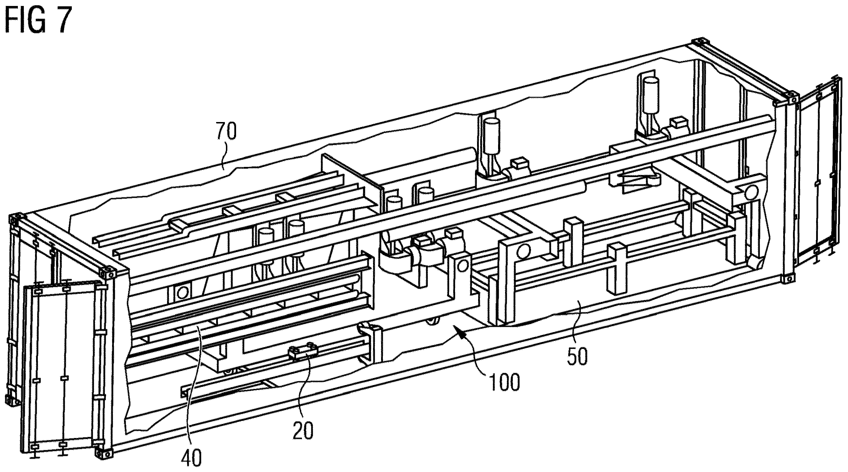

Extraction system 100 is preferably an extraction module configured to cooperate with further processing modules for extracted magnets, such as a demagnetization module. The extraction system 100 is further preferably configured to fit into a standard container as illustrated in Fig. 7. The standard container 70 (e.g. a 20 or 40 foot container) takes up all elements of the extraction system 100. Extraction system 100 is thus easily transportable. It can for example be transported to a port and set up at a port at which components of decommissioned wind turbines of an offshore wind farm arrive. Distances over which the large and heavy wind turbine generator components have to be transported can thereby be minimized. Besides reducing the amount of heavy rare earth material needed to manufacture new magnets by extracting and recycling the magnet elements from the generator component, energy required for the transportation can thus be saved.

The extraction system may for example achieve an extraction rate of 100 magnet modules per hour. In particular, the automatic alignment by means of the positioning device and the position detector allow a speeding-up of the extraction process. A safe and large scale extraction thus become possible.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. An extraction system configured to extract one or more magnet elements (10) from a wind turbine generator component (200), wherein the wind turbine generator component (200) comprises plural rows (220) of magnet elements (10), each row (220) comprising one or more magnet elements (10), wherein the extraction system (100) comprises:
- an extraction device (20) comprising one or more actuators (25); and
- a support structure (50) that supports the wind turbine generator component (200) relative to the extraction device (20), wherein the support structure (50) is configured to provide an alignment between the extraction device (20) and a row (220) of the wind turbine generator component (200);
wherein the system is configured to automatically extract, by means of the extraction device (20), one or more magnet elements (10) from the row (220) of the wind turbine generator component (200).

2. The extraction system according to claim 1, further comprising a positioning device (60) configured to automatically position the wind turbine generator component (200) relative to the extraction device (20) so as to provide the alignment between the extraction device (20) and the row (220).

3. The extraction system according to claim 2, wherein the positioning device (60) comprises an actuator (61, 62) configured to rotate and/or translate the wind turbine generator component (200) relative to the extraction device (20).

4. The extraction system according to claim 2 or 3, wherein the positioning device (60) comprises one or more motor driven rollers (61) that are configured to rest against an outer and/or inner circumference of the wind turbine generator component (200) and that are drivable to rotate the wind turbine generator component (200).

5. The extraction system according to any of the preceding claims, wherein the one or more actuators (25) of the extraction device (20) are operable to extract the one or more magnet elements (10) of a row (220) by separating the respective one or more magnet elements (10) from a magnet mount (210) of the wind turbine generator component (200).

6. The extraction system according to claim 5, wherein the extraction device (20) is configured to separate, by means of the actuator (25), the one or more magnet elements (10) from the magnet mount (210) by at least one of:
- moving the one or more magnet elements (10) relative to the magnet mount (210) to release the one or more magnet elements (10) from the magnet mount (210);
- loosening a fastening member of the magnet mount to release the one or more magnet elements (10) from the magnet mount; and
- disassembling the magnet mount to release the one or more magnet elements (10) from the magnet mount.

7. The extraction system according to any of the preceding claims, wherein the extraction device (20) comprises a push assembly and/or a pull assembly configured to push or pull, respectively, the one or more magnet elements (10) relative to the wind turbine generator component (200) to release the one or more magnet elements (10) from a magnet mount (210) of the wind turbine generator component (200), in particular from a form fitting connection provided by the magnet mount (210) .

8. The extraction system according to claim 7, wherein the extraction device (20) comprises a guide rail (21), and wherein the push assembly and/or the pull assembly comprises a carriage (22) movable in push or pull direction on the guide rail (21), wherein the actuator (25) of the extraction device (20) actuates the carriage (22).

9. The extraction system according to claim 7 or 8, wherein the push assembly comprises an engagement member (23) that engages the magnet element (10) in an extraction direction behind the magnet element (10), and wherein the actuator (25) is configured to push or pull the engagement member (23) to thereby cause the engagement member (23) to push the magnet element (10) in the extraction direction.

10. The extraction system according to any of the preceding claims, wherein the extraction device (20) further comprises a repositioning device (27) configured to change the orientation of a magnet element (10) extracted from a row.

11. The extraction system according to any of the preceding claims, wherein the extraction device (20) further comprises a moving device (31) configured to move an extracted magnet element (10) onto a transport device (40, 45).

12. The extraction system according to any of the preceding claims, wherein the extraction device (20) extracts the one or more magnet elements (10) from the wind turbine generator component (200) in a vertical direction, and wherein the system further comprises a vertical conveyor (40) to transport extracted magnet elements (10) in vertical direction.

13. The extraction system according to any of the preceding claims, wherein the extraction system (100) further comprises a transport device (45) configured interface a demagnetization system and to convey the one or more extracted magnet elements (10) towards the demagnetization system.

14. The extraction system according to any of the preceding claims, further comprising a control system (150) configured to control the extraction system (100) to (a) automatically align a row (220) of the wind turbine generator component (200) with the extraction device (20), to (b) automatically extract one or more magnet elements (10) from the row (220), to (c) automatically transport the one or more extracted magnet elements (10) towards a further processing device and to repeat steps (a)-(c) for one or more, preferably for all, rows (220) of the wind turbine generator component (200).

15. A method of extracting one or more magnet elements (10) from a wind turbine generator component (200), wherein the wind turbine generator component (200) comprises plural rows (220) of magnet elements, each row (220) comprising one or more magnet elements (10), wherein the method comprises:
- supporting, by a support structure (50), the wind turbine generator component (200) relative to an extraction device (20) comprising one or more actuators (25),
- aligning a row (220) of the wind turbine generator component (200) with the extraction device (20), and automatically extracting, by means of the extraction device (20), one or more magnet elements (10) from the row (220) of the wind turbine generator component (200).
